# EUROPEAN PATENT APPLICATION

(11) **EP 4 589 568 A1**
(43) Date of publication of application: **23.07.2025**
(21) Application number: 24215505.9
(22) Date of filing: 26.11.2024
(51) Int. Cl.: G08G 5/52, G06Q 10/00

(54) **CONTINUOUS FLIGHT SLOT MONITORING**

(30) Priority: 22.12.2023 US 202363614356 P; 21.05.2024 US 202418670586
(71) Applicant: The Boeing Company, Arlington, VA 22202 (US)
(72) Inventor: GÜEMES JIMÉNEZ, Alejandro, Arlington, 22202 (US); COSTAS, Pablo, Arlington, 22202 (US); LOPEZ LEONES, Javier, Arlington, 22202 (US); PEÑA ORTIZ, Nicolas, Arlington, 22202 (US); MUÑOZ HERNÁNDEZ, Andrés, Arlington, 22202 (US); MORALES TIRADO, Elisa, Arlington, 22202 (US)
(74) Representative: Bugnion S.p.A. - US1

(57) **Abstract**

The present disclosure provides techniques and systems for improved slot allocation. Slot scheduled data and flight tracking data for a flight are accessed, where the slot scheduled data indicates a first slot assigned to the flight at a departure airport, and the flight tracking data comprises an anticipated takeoff time. Slot occupancy data of the departure airport is examined to identify slot usage patterns. A slot adjustment for the flight is determined based on the anticipated takeoff time and the slot usage patterns at the departure airport. A notification of the slot adjustment for the flight is generated.

## Description

### FIELD

Aspects of the present disclosure relate to flight slot monitoring, and, more specifically, to monitoring flights and adjusting slot allocation to optimize air traffic operation.

### BACKGROUND

Currently, airlines do not have visibility into how slot delays evolve over time. This causes inefficiencies in several procedures, like passenger handling, fuel planning, and curfew management. This limitation prevents airlines from assessing the real impact of slot improvement requests until after these requests are processed and the slots are updated. Therefore, providing airlines with comprehensive visibility of their slot status will significantly enhance time management, improve passenger experience, and reduce costs due to reduced time delays and more efficient resource planning.

### SUMMARY

The present disclosure provides a method in one aspect, including accessing slot scheduled data and flight tracking data for a flight, where the slot scheduled data indicates a first slot assigned to the flight at a departure airport, and the flight tracking data comprises an anticipated takeoff time, examining slot occupancy data of the departure airport to identify slot usage patterns, determining a slot adjustment for the flight based on the anticipated takeoff time and the slot usage patterns at the departure airport, and generating a notification of the slot adjustment for the flight.

Other aspects of this disclosure provide one or more non-transitory computer-readable media containing, in any combination, computer program code that, when executed by the operation of a computer system, performs operations in accordance with one or more of the above methods, as well as systems comprising one or more computer processors and one or more memories containing one or more programs that, when executed by the one or more computer processors, perform operations in accordance with one or more of the above methods.

### BRIEF DESCRIPTION OF THE DRAWINGS

So that the manner in which the above recited features can be understood in detail, a more particular description, briefly summarized above, may be given by reference to example aspects, some of which are illustrated in the appended drawings.
Figure 1 depicts an example slot monitoring system, according to some aspects of the present disclosure.
Figure 2 depicts an example visual representation of slot monitoring data, according to some aspects of the present disclosure.
Figure 3 depicts an example visual representation of flight evolution data, according to some aspects of the present disclosure.
Figure 4 depicts an example visual representation of slot allocation data, according to some aspects of the present disclosure.
Figure 5 depicts an example method for managing and optimizing flight slots, according to some aspects of the present disclosure.
Figure 6 is a flow diagram depicting an example method for slot monitoring and allocation, according to some aspects of the present disclosure.
Figure 7 depicts an example computing device for regulation monitoring, according to some aspects of the present disclosure.

### DETAILED DESCRIPTION

The present disclosure introduces mechanisms for continuous flight slot monitoring and management. Specifically, aspects of the present disclosure introduce a flight slot monitoring system capable of monitoring slot allocation in real time, and dynamically adjusting slot allocation for improvements.

In some aspects, the flight slot monitoring system may receive and analyze current slot allocations and flight traffic data to evaluate the feasibility of slot improvement. Upon determining that slot allocation can be improved (e.g., by assigning a less congested slot to the flight, or assigning a slot that is relatively sooner or earlier as compared to the currently assigned slot), the system may communicate the proposed changes in slot allocations to end users for approval. In some aspects, when an allocated slot is canceled due to changes in flight progress (e.g., delay), the system may generate warnings automatically. The warning may then be promptly issued to inform end users (e.g., air traffic controllers, airline staff, airport authorities) of the cancelation and enable them to take appropriate actions.

In some aspects, the system may process flight traffic data and/or slot scheduled data received from one or more service providers, and convert them into a suitable format for visualization. In some aspects, the system may save the data in a database for further processing and analysis. In some aspects, the system may continuously receive traffic data from the service providers, using either a time-based approach, where data is received at defined intervals, or an event-based approach, triggered by specific events (e.g., takeoffs, landings). In such configurations, multiple sets of traffic data may be received across the entire duration of a flight. Each set of traffic data may be stored in the database along with a corresponding timestamp to ensure accuracy and relevance. In some aspects, the system may display the traffic data on a user interface (e.g., in the form of tables or charts), to provide end users with a clear and detailed view of the current flight status and slot allocations.

In some aspects, based on the received flight traffic data and/or slot scheduled data, the system may categorize flights based on their allocated slots at a departure airport for upcoming hours (e.g., 3 hours). In some aspects, the system visually represents the categorized data on a user interface (e.g., in the form of a bar chart).

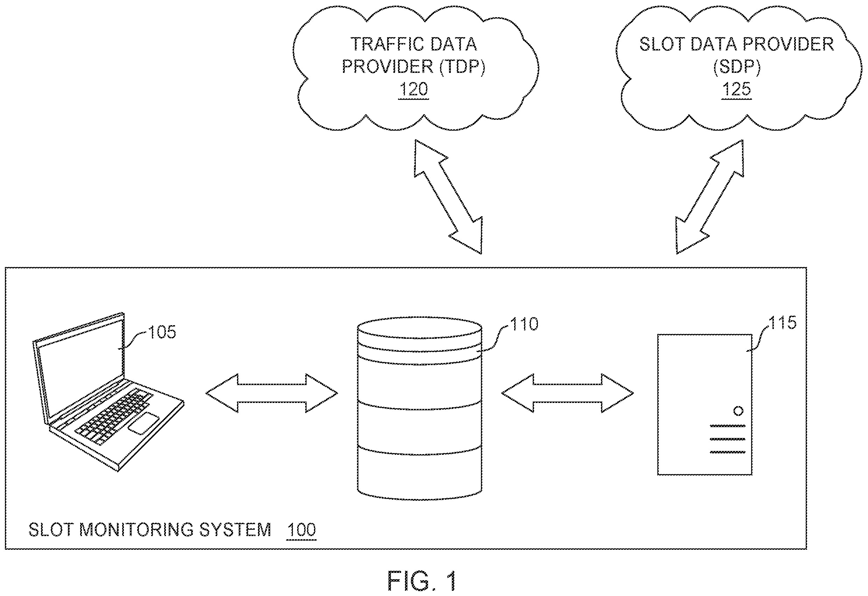

Figure 1 depicts an example slot monitoring system 100, according to some aspects of the present disclosure.

As illustrated, the system 100 comprises three components: a database 110, a backend server 115, and a frontend interface 105. The database 110 may serve as the central repository for storing slot data (e.g., slot allocations) and flight traffic data provided by one or more third-party service providers (such as the traffic data provider (TDP) 120 and the slot data provider (SDP) 125). In some aspects, the database 110 may be a structured database managed by object-oriented code.

In some aspects, the backend server 115 may self-manage subscriptions to one or more published queues (e.g., Flight_Data, Slot Scheduled_Data) provided by one or more service providers (e.g., using the Advanced Message Queuing Protocol (AMQP)). In some aspects, the subscription may allow the backend server 115 to receive traffic data and/or slot scheduled data for air flights in real time.

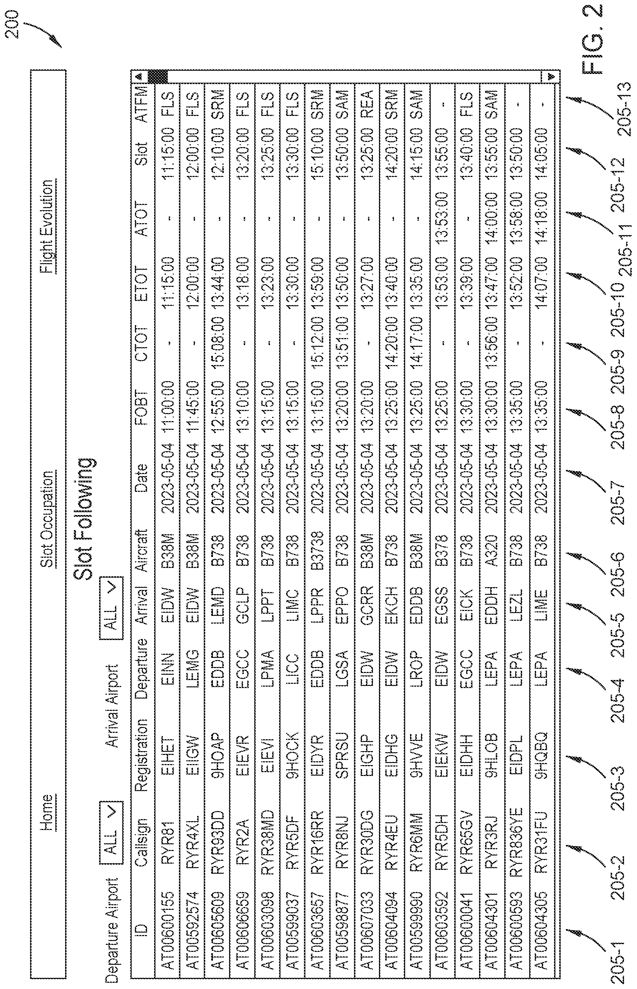

In some aspects, the traffic data received/retrieved from TDP 120 may refer to a set of information related to individual flight operations. The data may include, but are not limited to, flight ID, call sign, aircraft registration number, departure and arrival airports, aircraft number, flight date, estimated off-block time (EOBT), calculated take-off time (CTOT), estimated take-off time (ETOT), actual take-off time (ATOT), and the last air traffic flow management (ATFM) message (as depicted in Figure 2). In some aspects, the backend server 115 may receive/retrieve the scheduled slot data for each individual flight from the SDP 125. In some aspects, the slot data may include the scheduled slot time and allocated runway for each flight. For example, the slot data may indicate the time when the flight is scheduled to use the allocated runway for taking off at a departure airport.

As used herein, the ETOT may refer to an estimate of the time when an aircraft is expected to take off. The ETOT may be determined based on the planned departure time and factors such as aircraft readiness, boarding status, and local airport conditions, among others. As used herein, the CTOT may refer to a time calculated and issued by air traffic control authorities, and indicate the specific time by which an aircraft is expected to take off, considering broader air traffic management requirements. As used herein, the flight slot time may refer to a specific window of time during which a flight is scheduled to use its allocated runway for taking off. The window may span a few minutes (e.g., 5 minutes). A flight may be assigned a slot time during pre-flight planning phase based on the CTOT and/or ETOT, which are determined based on the initial flight plan submitted by the airline. As changes occur in flight status or due to operational constraints at the airport, the CTOT or ETOT may be updated. The backend server 115, in response, may generate the anticipated takeoff time for the flight based on the updated (or latest) CTOT and/or ETOT values. In some aspects, if the updated CTOT or ETOT value is earlier than a flight's scheduled slot time, it suggests that the flight could potentially depart earlier than originally planned.

In some aspects, the slot allocation data received/retrieved from SDP 125 may refer to a set of information related to the assignment and occupancy of departure slots at an airport. In some aspects, the airport may include multiple runways, and each runway is allocated multiple slot times throughout the day. In such configurations, slot allocation data may detail the specific flights assigned to each slot time across the airport's runways to provide a clear picture of the airport's operational schedule.

In some aspects, the frontend interface 105 may be configured to provide end-users with a web-based and real-time visual representation of flight status and/or other relevant slot allocation data, such as, where applicable, the last ATFM Message.

In some aspects, the traffic data for a flight and/or slot allocation data for a departure airport may be continuously updated to the system 100 throughout the entire duration of the flight. The continuous updating may enable the system 100 to track the progress of the flight in real time. Upon receiving the data, the backend server 115 of the system 100 may parse through the data to ensure that the received data is promptly updated into the database 110 and/or accurately reflected on the frontend interface 105.

In some aspects, the backend server 115 may set up an error handling mechanism to manage errors or potential data losses. For example, a timer may be programmed to monitor the frequency of incoming messages, which may include traffic data and/or slot allocation. If the backend server 115 does not receive a message within a defined time frame (e.g., 5 minutes), the backend server 115 may trigger a procedure to check the status of the connection. In some aspects, the backend server 115, upon detecting a disconnection, may automatically attempt to reconnect to the service provider (e.g., TDP 120 or SDP 125).

In some aspects, the backend server 115 may process the flight traffic data and/or slot allocation information (received/retrieved from one or more service providers), and convert the data into a standardized format for consistency and accuracy. The backend server 115 may transmit the data to the frontend interface 105, and instruct the interface 105 to display the data in a table or bar chart format, as depicted in Figures 2-4.

Figure 2 depicts an example visual representation 200 of slot monitoring data, according to some aspects of the present disclosure.

As illustrated, the flight traffic data are displayed in table format 200 on the frontend interface (e.g., 105 of Figure 1). The table includes 13 columns, each representing a specific parameter relevant to flight information. The columns include flight ID 205-1, call sign 205-2, aircraft registration number 205-3, departure airport 205-4, arrival airport 205-5, aircraft number 205-6, flight date 205-7, EOBT 205-8, CTOT 205-9, ETOT 205-10, ATOT 205-11, flight slot time 205-12, and ATFM message 205-13. As discussed above, the flight slot time 205-12 may refer to a specific window of time (e.g., 5 minutes) during which a flight is scheduled to use its allocated runway for taking off at a departure airport. In some aspects, the flight slot time may be inferred from the CTOT. If the CTOT is not given, the flight slot time may be inferred from the ETOT. In some aspects, to obtain the flight slot time, the time of the CTOT or the ETOT may be rounded to the nearest 5-minute interval for standardization. For example, if the CTOT is 15:08:00, the slot time is rounded up to 15:10:00. Alternatively, if the CTOT is 15:12:00, the slot time is rounded down to 15:10:00.

In some aspects, the frontend interface (e.g., 105 of Figure 1) may selectively display flights based on their EOBT and current flight state. In some aspects, the interface may only display flights with EOBT falling within a specific range (such as -3 hours to +12 hours relative to the current time with a flight state prior to becoming airborne).

In some aspects, the flights displayed in the table (within the frontend interface) may be marked in different colors based on their respective ATFM messages 205-13. For example, flights with a canceled slot, indicated by the ATFM message like SLC (Slot Cancellation), may be marked in red color. Flights with ATFM messages like REA (Ready) (possibility indicating readiness or a request for an earlier slot) are marked in green. Flights that have undergone slot adjustments are marked in blue, as indicated by ATFM messages like SAM (Slot Allocation Message), SIP (Slot Improvement Proposal Message), SMM (Slot Missed Message), SPA (Slot Improvement Proposal Acceptance Message), SRJ (Slot Improvement Proposal Rejection Message), SRM (Slot Revision Message), SWM (SIP Wanted Message). Flights delayed, indicated by the ATFM message like FLS (Flight Suspension Message), are marked in orange. Flights that do not have an associated ATFM message are left in white or uncolored. The color highlights provide a quick visual reference that allows end users to quickly identify the status of each flight based on its color.

As discussed above, in some aspects, the disclosed slot monitoring system (e.g., 100 of Figure 1) may monitor the flight's progress or status by continuously receiving updated traffic data and/or slot allocation data from one or more service providers (e.g., 120 or 125 of Figure 1). The reception of these messages may be either time-based, occurring at predetermined time intervals (e.g., 10 minutes), or event-based, triggered by specific flight events (e.g., takeoffs or landings). The backend server (e.g., 115 of Figure 1) may save each set of traffic data and/or slot allocation data in the database (e.g., 110 of Figure 1), along with a corresponding timestamp. In some aspects, the timestamp may refer to the time when a specific set of traffic data and/or slot allocation data was received by the backend server.

In some aspects, the backend server (e.g., 115 of Figure 1) may aggregate multiple sets of flight data and/or slot allocation data (received at different times) for the same flight, potentially using the flight ID as a key identifier. The aggregation may allow a more comprehensive review of a flight's data history. After aggregation, the backend server may convert the data into a format suitable for visualization, and save the data in the database (e.g., 110 of Figure 1). When the frontend interface (e.g., 105 of Figure 1) makes a request (e.g., by an end user entering a flight ID or clicking one as listed in the slot flowing table provided above), the backend server may retrieve the prepared data from the database, and transmit it to the frontend interface (e.g., via an API) for display.

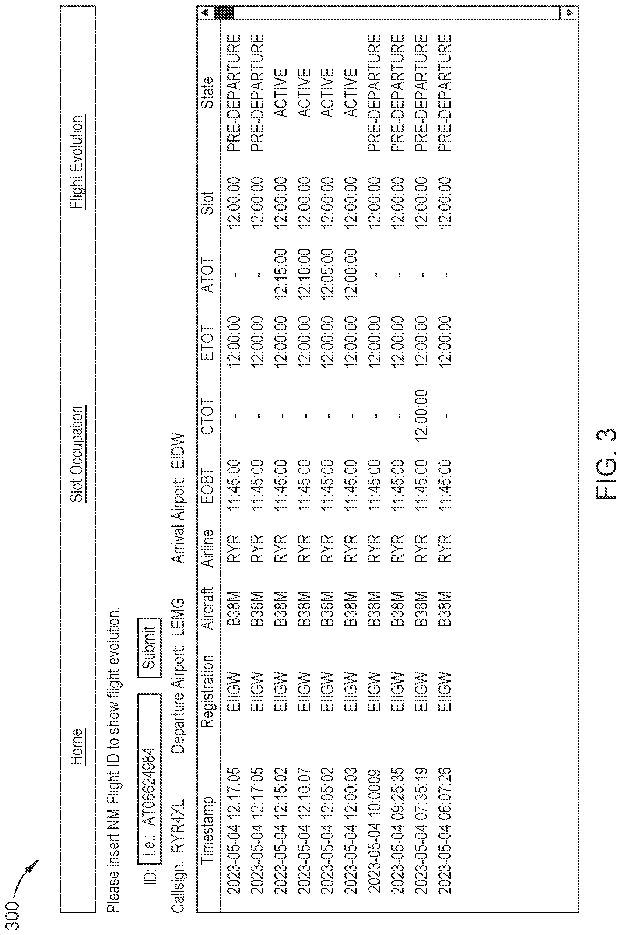

Figure 3 depicts an example visual representation 300 of flight evolution data, according to some aspects of the present disclosure.

As illustrated, the consecutively received sets of traffic data for the same flight are displayed in table format 300. The table includes 10 columns, including timestamp, aircraft registration number, aircraft number, airline name, EOBT, CTOT, ETOT, ATOT, flight slot time, and flight state (e.g., pre-departure or active). As illustrated, the table arranges the set of data in descending order, placing the most recent data at the top and the oldest at the bottom.

In some aspects, the backend server (e.g., 115 of Figure 1) may process the received traffic data (which includes details reflecting a flight's progress in real time, such as updated CTOT or ETOT) and slot scheduled information (e.g., the current runway assigned to a flight, and the original scheduled slot time). The backend server may categorize the flights based on their allocated runways and slot times. As used herein, the slot time may refer to a window of time during which a flight is scheduled to use its allocated runway. After processing and categorizing the flight data, the backend server may save the data to the database (e.g., 110 of Figure 1), in a format suitable for retrieval and visualization. When the frontend interface makes a request (e.g., by an end user requesting to see slot occupation for a specific slot in an airport), the backend server may retrieve the relevant data from the database, and send it to the frontend interface (e.g., 105 of Figure 1). In some aspects, the data transmission may be conducted via an API or other similar methods. The frontend interface may then generate a visual representation (e.g., a bar chart) of the categorized flight data.

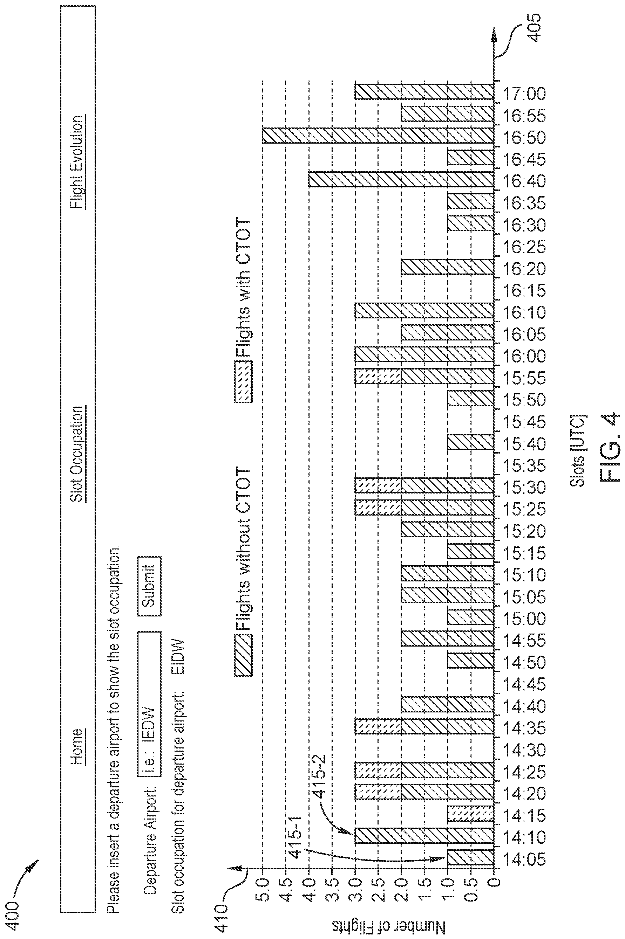

Figure 4 depicts an example visual representation 400 of slot allocation data, according to some aspects of the present disclosure.

In some aspects, the slot allocation data may be received/retrieved from the SDP (e.g., 125 of Figure 1). In some aspects, the slot allocation data may detail the assignment and/or occupancy of departure slots at an airport. When the airport includes multiple runways and each runway is allocated multiple slot times throughout the day, the slot allocation data may detail the specific flights assigned to each slot time across the multiple runways. In some aspects, by parsing through the slot allocation data, the slot tracking system (e.g., 100 of Figure 1) may generate a clear picture of the airport's operational schedule.

As illustrated, the bar chart 400 shows the slot allocation for a specific runway at a departure airport (e.g., EIDW). The x-axis 405 is marked with time intervals of 5 minutes, and represents slot times (e.g., the specific windows of time during which slots are allocated for flights). The y-axis 410 shows the number of flights, with each point on the axis corresponding to the number of flights assigned to a specific time slot. Each bar 415 on the chart corresponds to a specific 5-minute interval on the x-axis. The height of each bar 415 represents the number of flights assigned to that time slot. For example, the bar 415-1 at 14:05 has a height indicating one flight. This indicates that there is one flight assigned to the time slot at 14:05. The bar 415-2 at 14:10 has a height indicating three flights, which represents there are three flights assigned to the time slot at 14:10. The gaps (the absence of a bar at certain time slots), such as 14:30, suggest that no flights are assigned to that time slot. Additionally, in some aspects, flights with CTOT may be marked in yellow color, while flights without CTOT may be marked in blue color for easy distinction.

In some aspects, the backend server (e.g., 115 of Figure 1) the slot monitoring system (e.g., 100 of Figure 1) may evaluate the feasibility of slot improvement, leveraging traffic data (e.g., the ETOT or CTOT of the flight) and/or slot allocation information (e.g., the current runway assigned to the flight, the original scheduled slot time) received from one or more service providers. As discussed above, the flight data may include details reflecting the progress of a flight, such as CTOT, ETOT, and ATOT, as well as flight status (such as boarding, boarded, doors closed, and the like), and based on which, an anticipated takeoff time can be inferred. In some aspects, the flight data and slot allocation information may be received from the same service provider. In some aspects, the backend server may subscribe to or connect to more than one service provider (e.g., Network Manager B2B, Boeing dispatch tool, Dispatch Insights, or the Boeing Electronic Flight Bag (EFB), Flight Deck), and receive the flight data and slot data from different service providers.

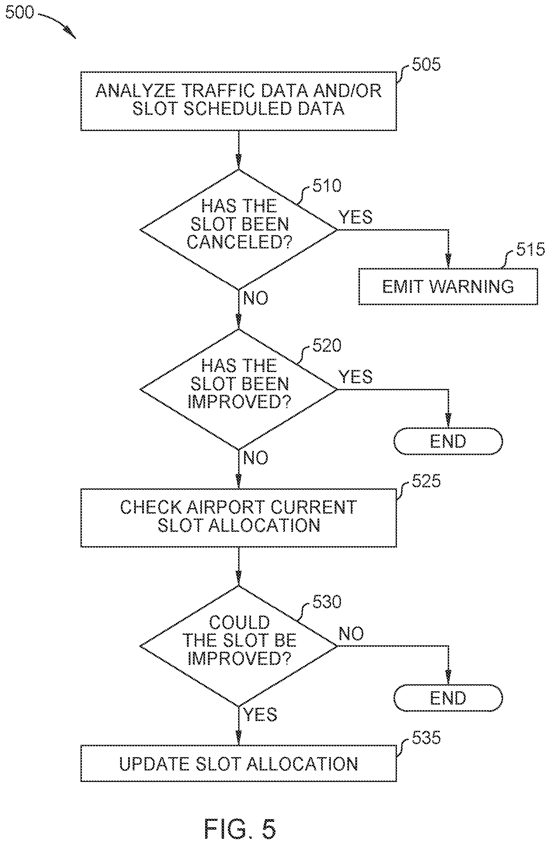

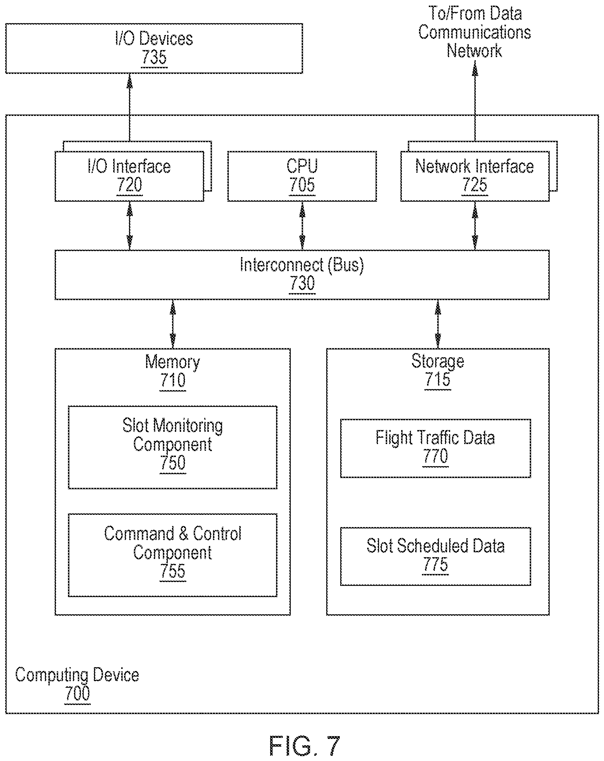

Figure 5 depicts an example method 500 for managing and optimizing flight slots, according to some aspects of the present disclosure. In some aspects, the method 500 may be performed by one or more computing devices, such as the backend server 115 as depicted in Figure 1, or the computing device 700 as depicted in Figure 7.

The method 500 begins at block 505, where a computing system (e.g., the backend server 115 of Figure 1) gathers and analyzes the current scheduled slot data and traffic data for a flight (by subscribing to one or more service providers). The scheduled slot data may indicate the runway (e.g., runway #1) assigned to the flight, and the current allocated slot time (which is determined based on the initial flight plan submitted by airlines), and the flight traffic data may include data representing the flight's status in real time. In some aspects, the flight traffic data may include changes in CTOT and/or ETOT, which can be used to infer the anticipated takeoff time of the flight. For example, in some aspects, if the most recent CTOT or ETOT value (e.g., 13:50) is earlier than a flight's scheduled slot time (e.g., 14:00), it suggests that the flight may be able to depart earlier than originally planned, if an earlier slot is available.

At block 510, the system checks if the current slot assigned to the flight at the departure airport has been canceled. If a cancellation is detected, the method 500 proceeds to block 515, where the system generates a warning and sends it to relevant stakeholders (e.g., airline operating teams, ground handling services, air traffic control administrators). If no cancellation is found, the method 500 moves to block 520.

At block 520, the system examines the current traffic data to see if the current allocated slot time has been adjusted for improvement. In some aspects, the examination may include checking if an early departure flight (e.g., the flight's anticipated takeoff time, derived from the latest CTOT or ETOT, is earlier than its current allocated slot time) or an on-time flight has been given a more favorable runway (e.g., a runway that is less congested compared to the current runway assigned to the flight). Additionally, in some aspects, for an early departure flight, the examination may include verifying if a new slot time that aligns with the flight's early departure time has been assigned while retaining the current runway. If the allocated slot time has been improved, the method 500 ends. If the allocated slot time has not been improved, the method 500 proceeds to block 525.

At block 525, in response to determining that the flight has not received an improved slot, the system reviews the current slot allocation at the airport, to understand the patterns of slot usage and identify potential opportunities for slot improvements. For example, for an on-time flight (e.g., the flight's anticipated takeoff time is the same as its current allocated slot time), the system may evaluate the slot occupancy of other runways to determine if an alternative, less congested runway within the airport can be assigned to the flight at its scheduled slot time. For an early departure flight (e.g., the flight's anticipated takeoff time is earlier than its current allocated slot time), the system may assess the occupancy of all slots preceding the scheduled slot time to determine whether an earlier slot can be assigned for the flight. Additionally, the system may also check the slot occupancy of other runways to explore further possibilities for optimizing slot allocation. In some aspects, the slot allocation data may be received/retrieved from the SDP (e.g., 125 of Figure 1).

At block 530, after evaluating slot allocation at the departure airport, the system evaluates whether there is potential to adjust the current slot allocations to improve efficiency at the departure airport. The evaluation may be conducted based on the analysis of current slot allocation (e.g., the number of flights assigned to each time slot for a specific runway), the slot scheduled data (e.g., the current scheduled slot time for the flight), and the flight tracking data (e.g., the anticipated takeoff time derived from latest ETOT or CTOT of the flight). For a flight departing on time, the evaluation may include checking whether an alternative runway (e.g., runway #2) can be assigned to the flight at its scheduled slot time. For a flight ready for departure earlier than its original scheduled slot time, the system may evaluate whether slot allocation can be adjusted to better align with the new anticipated departure time. This may include assigning a new slot time within the current runway that aligns with the early departure time, or allocating a slot within another runway to the flight to accommodate the early departure. For example, if a flight is originally allocated a slot time of 14:50 at runway #1, and subsequent traffic data updates lead to an anticipated takeoff time adjustment to 14:45 (based on updated CTOT or ETOT), the system may then check the current slot allocation data. If it identifies that the slot of 14:45 at runway #1 is available (e.g., Figure 4 shows that the 14:45 slot is empty), the system may reassign the flight to this earlier slot. If it identifies that the slot of 14:45 at runway #1 is not available (e.g., due to congestion from several flight being assigned), the system may then check the slot allocation for runway #2 or runway #3 to determine whether an earlier slot is available there. If an earlier slot on another runway is found to be available, the system may reassign the flight accordingly. Such adjustments enable the flight to depart earlier than initially planned, and therefore optimize the flight schedule and enhance overall airport slot utilization. If no improvement is found, the method 500 ends. Alternatively, if an improvement is considered feasible (e.g., an earlier slot within the current runway or an alternative runway has capacity), the method 500 proceeds to block 535, where the system updates the slot allocation. In some aspects, the updated slot information may then be communicated to relevant end users, like air traffic controllers, airline staff, and airport authorities for implementation and coordination.

In some aspects, moving a flight to an earlier slot (when available) can have a variety of substantial advantages. For example, by departing earlier, the flight may free the resources at the terminal (e.g., the gate, jet bridge, ground crew, and the like) earlier, allowing another aircraft to utilize those resources. Further, by departing earlier, the flight may reach its destination sooner, freeing the aircraft itself for additional flights sooner and/or decreasing the urgency on ground crew at the destination, which may allow them to plan or optimize their resource usage more effectively. As another example, in some aspects, departing earlier may allow the aircraft to complete the flight on time while consuming less fuel (e.g., by flying more slowly). This can substantially reduce resource usage (and environmental impact) while maintaining an on-time arrival.

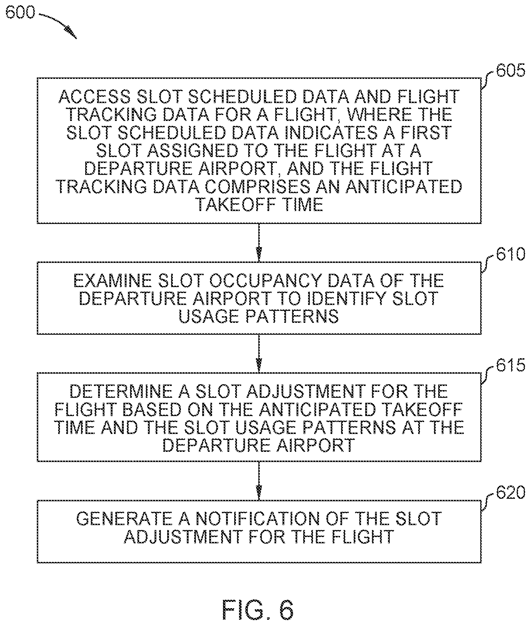

Figure 6 is a flow diagram depicting an example method 600 for slot monitoring and allocation, according to some aspects of the present disclosure.

At block 605, a computing system (e.g., the backend server 115 of Figure 1) accesses slot scheduled data (e.g., scheduled slot time 205-12 of Figure 2) and flight tracking data for a flight (e.g., from 205-1 to 205-11, and 205-13 of Figure 2) for a flight, where the slot scheduled data indicates a first slot assigned to the flight at a departure airport, and the flight tracking data comprises an anticipated takeoff time.

In some aspects, the flight tracking data may further comprise at least one of the following: (i) a flight identification number for the flight; (ii) a callsign for the flight (e.g., 205-2 of Figure 2); (iii) a registration number for an aircraft associated with the flight (e.g., 205-3 of Figure 2); (iv) an arrival airport of the flight (e.g., 205-5 of Figure 2); (v) a departure airport of the flight (e.g., 205-4 of Figure 2); (vi) a date of the flight (e.g., 205-7 of Figure 2); (vii) an estimated off-block time (EOBT) (e.g., 205-8 of Figure 2); (viii) an estimated take-off time (ETOT) (e.g., 205-10 of Figure 2); (vx) a calculated take-off time (CTOT) (e.g., 205-9 of Figure 2); (x) an actual take-off time (ATOT) (e.g., 205-11 of Figure 2); or (xi) an Air Traffic Flow Management (ATFM) message (e.g., 205-13 of Figure 2).

In some aspects, the first slot may be determined based at least on one of the CTOT or the ETOT.

In some aspects, the first slot assigned to the flight may correspond to a first runway.

At block 610, the system examines slot occupancy data (e.g., data as depicted in Figure 4) of the departure airport to identify slot usage patterns.

At block 615, the system determines a slot adjustment for the flight based on the anticipated takeoff time and the slot usage patterns at the departure airport.

In some aspects, the slot adjustment may further comprise assigning a second slot, within the first runway, to the flight, where the second slot aligns with the anticipated takeoff time.

In some aspects, the slot adjustment may further comprise assigning a second slot, within a second runway, to the flight, where the second slot aligns with the anticipated takeoff time.

At block 620, the system generates a notification of the slot adjustment for the flight.

In some aspects, the slot occupancy data of the departure airport may comprise at least one of (i) a number of available slots at the departure airport; (ii) a number of scheduled outbound flights from the departure airport; or (iii) slot allocations between the available slots and the scheduled outbound flights.

In some aspects, the system may further update a data store to save the slot adjustment for the flight, and update a user interface to display the slot adjustment for the flight.

In some aspects, the system may further receive a first set of flight tracking data for the flight at a first time, receive a second set of flight tracking data for the flight at a second time, where the second set of flight tracking data is received at a later time than the first set of flight tracking, and generate a visual representation that displays the first and second sets of flight tracking data on a user interface.

In some aspects, the system may further store each respective set of flight tracking data, of the first and second sets of flight tracking data, in a data store, with a respective timestamp.

Figure 7 depicts an example computing device 700 for regulation monitoring, according to some aspects of the present disclosure. Although depicted as a physical device, in some aspects, the computing device 700 may be implemented using virtual device(s), and/or across a number of devices (e.g., in a cloud environment). In some aspects, the computing device 700 corresponds to or comprises a slot monitoring system, such as the slot monitoring system 100 of Figure 1.

As illustrated, the computing device 700 includes a CPU 705, memory 710, storage 715, one or more network interfaces 725, and one or more I/O interfaces 720. In the illustrated aspect, the CPU 705 retrieves and executes programming instructions stored in memory 710, as well as stores and retrieves application data residing in storage 715. The CPU 705 is generally representative of a single CPU and/or GPU, multiple CPUs and/or GPUs, a single CPU and/or GPU having multiple processing cores, and the like. The memory 710 is generally considered to be representative of a random access memory. Storage 715 may be any combination of disk drives, flash-based storage devices, and the like, and may include fixed and/or removable storage devices, such as fixed disk drives, removable memory cards, caches, optical storage, network attached storage (NAS), or storage area networks (SAN).

In some aspects, I/O devices 735 (such as keyboards, monitors, etc.) are connected via the I/O interface(s) 720. Further, via the network interface 725, the computing device 700 can be communicatively coupled with one or more other devices and components (e.g., via a network, which may include the Internet, local network(s), and the like). As illustrated, the CPU 705, memory 710, storage 715, network interface(s) 725, and I/O interface(s) 720 are communicatively coupled by one or more buses 730. In the illustrated aspect, the memory 710 includes a slot monitoring component 750 and a command and control component 755.

Although depicted as discrete components for conceptual clarity, in some aspects, the operations of the depicted components (and others not illustrated) may be combined or distributed across any number of components. Further, although depicted as software residing in memory 710, in some aspects, the operations of the depicted components (and others not illustrated) may be implemented using hardware, software, or a combination of hardware and software.

In the illustrated aspect, the slot monitoring component 750 may be used to evaluate slot times and changes, as discussed above. For example, the slot monitoring component 750 may evaluate updated tracking information to determine whether a flight may be prepared to take off prior to their assigned slot time. Similarly, the slot monitoring component 750 may evaluate whether earlier slots are available for flights that are running ahead of schedule.

In the illustrated example, the command and control component 755 may be used to obtain revised or improved slot times, as discussed above. For example, the command and control component 755 may request and/or provide earlier slot times to flights that are prepared to depart earlier than was previously anticipated, as discussed above.

In the illustrated example, the storage 715 may include a set of flight traffic data 770 (discussed above) and a set of slot scheduled data 775 (e.g., currently assigned slot times for each flight). In some aspects, the aforementioned data may be saved in a remote database that connects to the computing device 700 via a network.

In the current disclosure, reference is made to various aspects. However, it should be understood that the present disclosure is not limited to specific described aspects. Instead, any combination of the following features and elements, whether related to different aspects or not, is contemplated to implement and practice the teachings provided herein. Additionally, when elements of the aspects are described in the form of "at least one of A and B," it will be understood that aspects including element A exclusively, including element B exclusively, and including element A and B are each contemplated. Furthermore, although some aspects may achieve advantages over other possible solutions and/or over the prior art, whether or not a particular advantage is achieved by a given aspect is not limiting of the present disclosure. Thus, the aspects, features, aspects and advantages disclosed herein are merely illustrative and are not considered elements or limitations of the appended claims except where explicitly recited in a claim(s). Likewise, reference to "the invention" shall not be construed as a generalization of any inventive subject matter disclosed herein and shall not be considered to be an element or limitation of the appended claims except where explicitly recited in a claim(s).

As will be appreciated by one skilled in the art, aspects described herein may be embodied as a system, method or computer program product. Accordingly, aspects may take the form of an entirely hardware aspect, an entirely software aspect (including firmware, resident software, micro-code, etc.) or an aspect combining software and hardware aspects that may all generally be referred to herein as a "circuit," "module" or "system." Furthermore, aspects described herein may take the form of a computer program product embodied in one or more computer readable storage medium(s) having computer readable program code embodied thereon.

Program code embodied on a computer readable storage medium may be transmitted using any appropriate medium, including but not limited to wireless, wireline, optical fiber cable, RF, etc., or any suitable combination of the foregoing.

Computer program code for carrying out operations for aspects of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present disclosure are described herein with reference to flowchart illustrations and/or block diagrams of methods, apparatuses (systems), and computer program products according to aspects of the present disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the block(s) of the flowchart illustrations and/or block diagrams.

These computer program instructions may also be stored in a computer readable medium that can direct a computer, other programmable data processing apparatus, or other device to function in a particular manner, such that the instructions stored in the computer readable medium produce an article of manufacture including instructions which implement the function/act specified in the block(s) of the flowchart illustrations and/or block diagrams.

The computer program instructions may also be loaded onto a computer, other programmable data processing apparatus, or other device to cause a series of operational steps to be performed on the computer, other programmable apparatus or other device to produce a computer implemented process such that the instructions which execute on the computer, other programmable data processing apparatus, or other device provide processes for implementing the functions/acts specified in the block(s) of the flowchart illustrations and/or block diagrams.

The flowchart illustrations and block diagrams in the Figures illustrate the architecture, functionality, and operation of possible implementations of systems, methods, and computer program products according to various aspects of the present disclosure. In this regard, each block in the flowchart illustrations or block diagrams may represent a module, segment, or portion of code, which comprises one or more executable instructions for implementing the specified logical function(s). It should also be noted that, in some alternative implementations, the functions noted in the block may occur out of the order noted in the Figures. For example, two blocks shown in succession may, in fact, be executed substantially concurrently, or the blocks may sometimes be executed in the reverse order or out of order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

While the foregoing is directed to aspects of the present disclosure, other and further aspects of the disclosure may be devised without departing from the basic scope thereof, and the scope thereof is determined by the claims that follow.

Further examples and combinations thereof include the following:
Clause 1. A method, comprising:
   accessing slot scheduled data (provided by 125) and flight tracking data for a flight (provided by 120), wherein the slot scheduled data indicates a first slot assigned to the flight at a departure airport, and the flight tracking data comprises an anticipated takeoff time ;
   examining slot occupancy data (provided by 125) of the departure airport to identify slot usage patterns;
   determining a slot adjustment for the flight based on the anticipated takeoff time and the slot usage patterns at the departure airport; and
   generating a notification of the slot adjustment for the flight.
Clause 2. The method of Clause 1, wherein the flight tracking data further comprises at least one of the following:
   (i) a flight identification number for the flight;
   (ii) a callsign for the flight;
   (iii) a registration number for an aircraft associated with the flight;
   (iv) an arrival airport of the flight;
   (v) a departure airport of the flight;
   (vi) a date of the flight;
   (vii) an estimated off-block time (EOBT),
   (viii) an estimated take-off time (ETOT);
   (vx) a calculated take-off time (CTOT);
   (x) an actual take-off time (ATOT); or
   (xi) an Air Traffic Flow Management (ATFM) message.
Clause 3. The method of Clause 2, wherein the first slot is determined based at least on one of the CTOT or the ETOT.
Clause 4. The method of Clause 1, wherein the first slot assigned to the flight corresponds to a first runway.
Clause 5. The method of Clause 4, wherein the slot adjustment further comprises assigning a second slot, within the first runway, to the flight, wherein the second slot aligns with the anticipated takeoff time.
Clause 6. The method of Clause 1, wherein the slot adjustment further comprises assigning a second slot, within a second runway, to the flight, wherein the second slot aligns with the anticipated takeoff time.
Clause 7. The method of Clause 1, wherein the slot occupancy data of the departure airport comprises at least one of (i) a number of available slots at the departure airport; (ii) a number of scheduled outbound flights from the departure airport; or (iii) slot allocations between the available slots and the scheduled outbound flights.
Clause 8. The method of Clause 1, further comprising:
   updating a data store (110) to save the slot adjustment for the flight; and
   updating a user interface (105) to display the slot adjustment for the flight.
Clause 9. The method of Clause 1, further comprising:
   receiving a first set of flight tracking data for the flight at a first time;
   receiving a second set of flight tracking data for the flight at a second time, wherein the second set of flight tracking data is received at a later time than the first set of flight tracking; and
   generating a visual representation that displays the first and second sets of flight tracking data on a user interface.
Clause 10. The method of Clause 9, further comprising storing each respective set of flight tracking data, of the first and second sets of flight tracking data, in a data store, with a respective timestamp.
Clause 11. A system comprising:
   one or more computer processors; and
   one or more memories collectively containing one or more programs, which, when executed by the one or more computer processors, perform operations, the operations comprising:
      accessing slot scheduled data (provided by 125) and flight tracking data for a flight (provided by 120), wherein the slot scheduled data indicates a first slot assigned to the flight at a departure airport, and the flight tracking data comprises an anticipated takeoff time;
      examining slot occupancy data (provided by 125) of the departure airport to identify slot usage patterns;
      determining a slot adjustment for the flight based on the anticipated takeoff time and the slot usage patterns at the departure airport; and
      generating a notification of the slot adjustment for the flight.
Clause 12. The system of Clause 11, wherein the flight tracking data further comprises at least one of the following:
   (i) a flight identification number for the flight;
   (ii) a callsign for the flight;
   (iii) a registration number for an aircraft associated with the flight;
   (iv) an arrival airport of the flight;
   (v) a departure airport of the flight;
   (vi) a date of the flight;
   (vii) an estimated off-block time (EOBT),
   (viii) an estimated take-off time (ETOT);
   (vx) a calculated take-off time (CTOT);
   (x) an actual take-off time (ATOT); or
   (xi) an Air Traffic Flow Management (ATFM) message.
Clause 13. The system of Clause 12, wherein the first slot is determined based at least on one of the CTOT or the ETOT.
Clause 14. The system of Clause 11, wherein the first slot assigned to the flight corresponds to a first runway.
Clause 15. The system of Clause 14, wherein the slot adjustment further comprises assigning a second slot, within the first runway, to the flight, wherein the second slot aligns with the anticipated takeoff time.
Clause 16. The system of Clause 11, wherein the slot adjustment further comprises assigning a second slot, within a second runway, to the flight, wherein the second slot aligns with the anticipated takeoff time.
Clause 17. The system of Clause 11, wherein the slot occupancy data of the departure airport comprises at least one of (i) a number of available slots at the departure airport; (ii) a number of scheduled outbound flights from the departure airport; or (iii) slot allocations between the available slots and the scheduled outbound flights.
Clause 18. The system of Clause 11, wherein the one or more programs, which, when executed on any combination of the one or more computer processors, perform the operations further comprising:
   updating a data store (110) to save the slot adjustment for the flight; and
   updating a user interface (105) to display the slot adjustment for the flight.
Clause 19. The system of Clause 11, wherein the one or more programs, which, when executed on any combination of the one or more computer processors, perform the operations further comprising:
   receiving a first set of flight tracking data for the flight at a first time;
   receiving a second set of flight tracking data for the flight at a second time, wherein the second set of flight tracking data is received at a later time than the first set of flight tracking; and
   generating a visual representation that displays the first and second sets of flight tracking data on a user interface.
Clause 20. One or more non-transitory computer-readable media containing, in any combination, computer program code that, when executed by operation of a computer system, performs operations comprising:
   accessing slot scheduled data (provided by 125) and flight tracking data for a flight (provided by 120), wherein the slot scheduled data indicates a first slot assigned to the flight at a departure airport, and the flight tracking data comprises an anticipated takeoff time;
   examining slot occupancy data (provided by 125) of the departure airport to identify slot usage patterns;
   determining a slot adjustment for the flight based on the anticipated takeoff time and the slot usage patterns at the departure airport; and
   generating a notification of the slot adjustment for the flight.

## Claims

1. A computer-implemented method (600) for slot monitoring and allocation, the method (600) comprising:
accessing slot scheduled data and flight tracking data for a flight (605) , wherein the slot scheduled data indicates a first slot assigned to the flight at a departure airport, and the flight tracking data comprises an anticipated takeoff time;
examining slot occupancy data of the departure airport to identify slot usage patterns (610);
determining a slot adjustment for the flight based on the anticipated takeoff time and the slot usage patterns at the departure airport (615); and
generating a notification of the slot adjustment for the flight (620).

2. The method (600) of claim 1, wherein the flight tracking data further comprises at least one of the following:
a flight identification number for the flight;
a callsign for the flight;
a registration number for an aircraft associated with the flight;
an arrival airport of the flight;
a departure airport of the flight;
a date of the flight;
an estimated off-block time, EOBT;
an estimated take-off time, ETOT;
a calculated take-off time, CTOT;
an actual take-off time, ATOT; or
an Air Traffic Flow Management, ATFM, message.

3. The method (600) of claim 2, wherein the first slot is determined based at least on one of the CTOT or the ETOT.

4. The method (600) of any one of the preceding claims, wherein the first slot assigned to the flight corresponds to a first runway.

5. The method (600) of claim 4, wherein the slot adjustment further comprises assigning a second slot, within the first runway, to the flight, wherein the second slot aligns with the anticipated takeoff time.

6. The method (600) of any one of claims 1 to 4, wherein the slot adjustment further comprises assigning a second slot, within a second runway, to the flight, wherein the second slot aligns with the anticipated takeoff time.

7. The method (600) of any one of the preceding claims, wherein the slot occupancy data of the departure airport comprises at least one of (i) a number of available slots at the departure airport; (ii) a number of scheduled outbound flights from the departure airport; or (iii) slot allocations between the available slots and the scheduled outbound flights.

8. The method (600) of any one of the preceding claims, further comprising:
updating a data store (110) to save the slot adjustment for the flight; and
updating a user interface (105) to display the slot adjustment for the flight.

9. The method (600) of any one of the preceding claims, further comprising:
receiving a first set of flight tracking data for the flight at a first time;
receiving a second set of flight tracking data for the flight at a second time, wherein the second set of flight tracking data is received at a later time than the first set of flight tracking; and
generating a visual representation that displays the first and second sets of flight tracking data on a user interface.

10. The method (600) of claim 9, further comprising storing each respective set of flight tracking data, of the first and second sets of flight tracking data, in a data store, with a respective timestamp.

11. A system comprising:
one or more computer processors; and
one or more memories collectively containing one or more programs, which, when executed by the one or more computer processors, perform operations, the operations comprising:
accessing slot scheduled data and flight tracking data for a flight (provided by 120), wherein the slot scheduled data indicates a first slot assigned to the flight at a departure airport, and the flight tracking data comprises an anticipated takeoff time;
examining slot occupancy data of the departure airport to identify slot usage patterns;
determining a slot adjustment for the flight based on the anticipated takeoff time and the slot usage patterns at the departure airport; and
generating a notification of the slot adjustment for the flight.

12. The system of claim 11, wherein the flight tracking data further comprises at least one of the following:
a flight identification number for the flight;
a callsign for the flight;
a registration number for an aircraft associated with the flight;
an arrival airport of the flight;
a departure airport of the flight;
a date of the flight;
an estimated off-block time, EOBT;
an estimated take-off time, ETOT;
a calculated take-off time, CTOT;
an actual take-off time, ATOT; or
an Air Traffic Flow Management, ATFM, message.

13. The system of claim 12, wherein the first slot is determined based at least on one of the CTOT or the ETOT.

14. The system of any one of claims 11 to 13, wherein the first slot assigned to the flight corresponds to a first runway.

15. The system of any one of claims 11 to 14, wherein the slot occupancy data of the departure airport comprises at least one of (i) a number of available slots at the departure airport; (ii) a number of scheduled outbound flights from the departure airport; or (iii) slot allocations between the available slots and the scheduled outbound flights.
